# EUROPÄISCHE PATENTSCHRIFT

(11) **EP 0 535 176 B1**
(45) Veröffentlichungstag und Bekanntmachung des Hinweises auf die Patenterteilung: **25.10.1995**
(21) Anmeldenummer: 92904967.4
(22) Anmeldetag: 20.02.1992
(51) Int. Cl.: B60T 8/48

(54) **BREMSANLAGE MIT EINER EINRICHTUNG ZUM REGELN SOWOHL DES BREMSSCHLUPFES ALS AUCH DES ANTRIEBSSCHLUPFES**
BRAKING SYSTEM WITH A DEVICE FOR REGULATING BOTH THE BRAKING AND DRIVE SLIP (ASR)
SYSTEME DE FREINAGE COMPORTANT UN DISPOSITIF D'ANTIPATINAGE AU FREINAGE ET D'ANTIPATINAGE A L'ACCELERATION (ASR)

(30) Priorität: 19.04.1991 DE 4112821
(43) Veröffentlichungstag der Anmeldung: 07.04.1993
(73) Patentinhaber: ITT Automotive Europe GmbH, 60488 Frankfurt (DE)
(72) Erfinder: BECK, Erhard, D-6290 Weilburg (DE)
(86) Internationale Anmeldenummer: EP9200357
(87) Internationale Veröffentlichungsnummer: WO9218363

(56) Entgegenhaltungen:
- EP-A- 0 376 788
- DE-A- 3 832 023
- DE-C- 3 439 408
- FR-A- 2 601 636
- GB-A- 2 218 480

## Beschreibung

Die vorliegende Erfindung geht von einer Bremsanlage gemäß dem Oberbegriff des Anspruches 1 aus.

In der DE 38 32 023 A1 ist eine gattungsgemäße blockiergeschützte Bremsanlage beschrieben, die nach dem Rückförderprinzip arbeitet. Um zur Antriebsschlupfregelung durch die Bremsleitung über den Tandemhauptzylinder aus dem Druckmittelvorratsbehälter in die Radbremse des durchdrehenden Rades fördern zu können, ist die Pumpe selbstansaugend. Es muß jedoch verhindert werden, daß durch die Selbstansaugung der Pumpe in der Radbremse ein Unterdruck erzeugt wird. Dazu wird in der zur Saugseite der Pumpe führenden Rücklaufleitung der Radbremse ein in Saugrichtung öffnendes Rückschlagventil eingebaut, dessen Vordruck mindestens so hoch ist wie der Atmosphärendruck.

Bei einer Bremskreisaufteilung, die nur Radbremsen angetriebener bzw. nicht angetriebener Räder in jeweils einem Bremskreis vorsieht, also bei einer sogenannten Schwarz-Weiß-Aufteilung oder bei Allradantrieb ist das Problem so behoben. Anders sieht es jedoch bei einer Diagonalaufteilung aus, wenn das Fahrzeug einachsig angetrieben wird. Dann befinden sich in beiden Bremskreisen jeweils eine Bremse eines angetriebenen und eines nicht angetriebenen Rades. Einerseits sollte bei einer Antriebsschlupfregelung nur im Bremszylindern angetriebener Räder Druck aufgebaut werden. Andererseits müssen aber auch die Bremsen nicht angetriebener Räder vor Unterdruck geschützt werden. Wenn die Pumpe im Antriebsschlupfregelbetrieb durch die Bremsleitung und den Tandemhauptzylinder ansaugt, erzeugt sie etwa 0,8 bar Unterdruck, der sich - je nach auftretenden Drosseleffekten zwischen Behälter und Anschluß der Saugleitung an die Bremsleitung - abgeschwächt bis zur Bremse des nicht angetriebenen Rades fortpflanzen kann, sofern sich das Trennventil zwischen den Zuleitungen zu den Radbremsen des angetriebenen und des nicht angetriebenen Rades befindet. Wenn man jedoch beide Radbremsen vom Hauptzylinder aus betrachtet und jenseits des Trennventils anordnen würde, dann würde auch die des nicht angetriebenen Rades bei der Antriebsschlupfregelung betätigt. Eine komplizierte Schaltlogik, die während einer Antriebsschlupfregelung das entsprechende Einlaßventil schließt, ist vergleichsweise aufwendig und kostspielig. Bei Anordnung des Trennventils zwischen den Bremszuleitungen ist ein Schließen des Einlaßventils in der Regel zwecklos, da den Einlaßventilen meistens Rückschlagventile parallelgeschaltet sind, die in Auslaßrichtung öffnen und daher trotzdem eine Unterdruckbildung ermöglichen.

Die Aufgabe der Erfindung besteht daher darin, unter Verzicht auf zusätzliche Hilfsmittel auch die Bremsen der nicht angetriebenen Räder bei der Antriebsschlupfregelung vor Unterdruck und vor Druckaufbau zuverlässig zu schützen.

Diese Aufgabe wird gelöst durch die kennzeichnenden Merkmale des Anspruches 1. Das Prinzip der Erfindung beruht also auf der geschickten Anordnung der Bremse des nicht angetrieben Rades sowie zweier Rückschlagventile. Ohne Betätigung der Einlaßventile wird durch das Trennventil zwischen den Zuleitungen zu den Einlaßventilen bei einer Antriebsschlupfregelung nur die Bremse des angetriebenen Rades vom Pumpendruck gefüllt. Die Radbremse des nicht angetriebenen Rades kann nur über ihre - bezüglich des Trennventils - hauptzylinderseitige Zuleitung gefüllt werden, also nur während einer pedalbetätigten Bremsung. Ihr Druckmittelabbau erfolgt über eine Hilfsleitung zur Druckseite der Pumpe. An dieser Seite des Trennventils kann kein Unterdruck auftreten. Selbst wenn aus Sicherheitsgründen parallel zu den Einlaßventilen Rückschlagventile vorgsehen sind - das ist der Regelfall -, ist auch die Radbremse des nicht angetriebenen Rades geschützt.

Weitere vorteilhafte Merkmale der Erfindung ergeben sich aus der folgenden Beschreibung eines bevorzugten Ausführungsbeispiels anhand einer Schaltzeichnung.

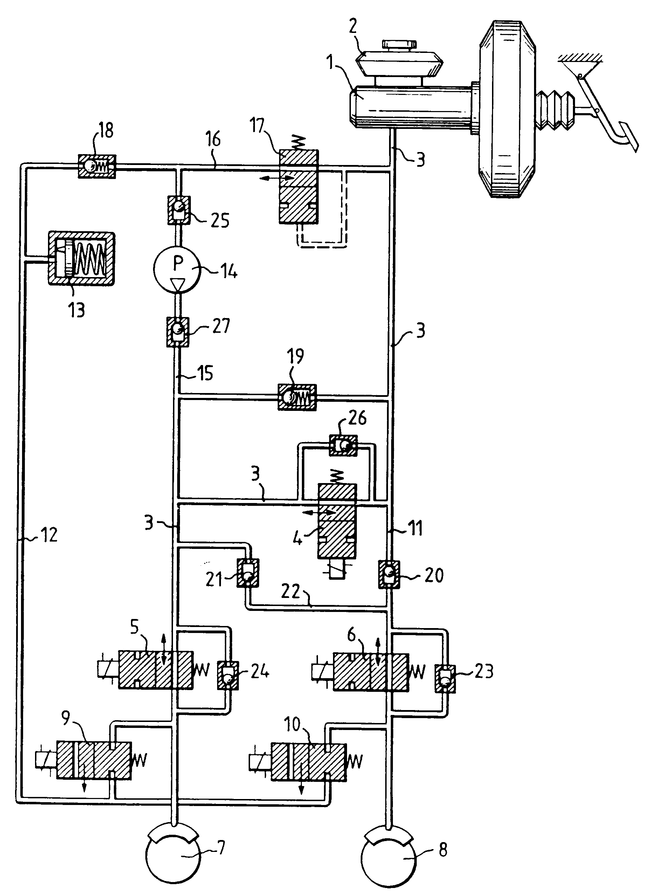

Der Deutlichkeit halber wurden nur funktionswesentliche Elemente in die Zeichnung aufgenommen.

Vom Hauptzylinder 1, der vom Druckmittelvorratsbehälter 2 gespeist wird, führt die Bremsleitung 3 durch das Trennventil 4 zum Einlaßventil 5 der Radbremse 7 eines angetriebenen Rades. Vor dem Trennventil 4 zweigt die Zweigleitung 11 zum Einlaßventil 6 der Radbremse 8 eines nicht angetriebenen Rades ab. Von denen zur Bremsdruckregelung betätigten Auslaßventilen 9 und 10 der Radbremsen 7 und 8 führt die Rücklaufleitung 12 zum Niederdruckspeicher 13 und von dort weiter zur Saugseite der Pumpe 14. Von dieser verläuft die Druckleitung 15 über das Druckventil 27 zur Bremsleitung 3, in die sie auf der dem Hauptzylinder 1 abgewandten Seite des Trennventils 4 einmündet.

Zur Antriebsschlupfregelung besitzt die Pumpe von der Bremsleitung 3 zu ihrer Saugseite eine Saugleitung 16, die zwischen dem Hauptzylinder 1 und dem Trennventil 4 abzweigt und mit dem Ansaugschaltventil 17 versehen ist.

Besondere Sicherheitsmaßnahmen stellen das Saugventil 18 und Überdruckventil 19 dar. Das Saugventil 18 besitzt einen Vordruck, der größer ist als ein 1 bar, und verhindert eine Unterdruckbildung in der Rücklaufleitung 12. Das Überdruckventil 19 öffnet erst bei einem bar Vordruck, der höher ist als der zur Antriebsschlupfregelung aufzubringende Bremsdruck, also etwa zwischen 60 bar und 160 bar. Es entlastet die Leitungen durch Ablassen von Druckmittel in den Hauptzylinder 1, wenn sich der Pumpendruck einmal stauen sollte.

Als neue Elemente sind in die Schaltung zusätzlich das Rückschlagventil und die Hilfsleitung 22 mit dem in ihr angeordneten Rückschlagventil 21 aufgenommen worden. Ihr Zweck wird anhand der folgenden Funktionsbeschreibung der Bremsanlage verdeutlicht.

Bei einer pedalbetätigten Bremsung, bei der der Bremsschlupf im zulässigen Rahmen bleibt, befinden sich die Schaltventile 4,5,6,9,10 und 17 ständig in der dargestellten Grundstellung. Lediglich das Ansaugschaltventil 17 wird vom Hauptzylinderdruck geschlossen. Das drucklos offene Ansaugschaltventil hat den Vorteil, daß die Pumpe jederzeit aus dem Tandemhauptzylinder ansaugen kann, es sei denn, der Fahrer bremst gerade. Es kann aber stattdessen auch ein drucklos geschlossenes, von pumpenseitigem Unterdruck zu öffnendes Ventil, ein mechanisch - z.B. über den Bremspedalweg - aktiviertes Ventil oder ein elektromagnetisch betätigtes SO- oder SG-Ventil verwendet werden. Bei einer Normalbremsung wird der Druck in den Radbremsen über die Einlaßventile 5 und 6 auf- und wieder abgebaut.

Bei Blockiergefahr einer Radbremse kann auf bekannte Weise über die Auslaßventile 9 und 10 Druckmittel in den Niederdruckspeicher 13 abgelassen und von dort mit Hilfe der Pumpe 14 wieder der Bremsleitung 3 zugeführt werden.

All diese Vorgänge sind mit Einrichtungen nach dem Stand der Technik ebenso durchzuführen, wie mit der erfindungsgemäßen Bremsanlage.

Bei einer Antriebsschlupfregelung, d.h. bei einer Bremsung eines angetriebenen Rades ohne Pedalbetätigung bietet sich ein anderes Bild. Der Hauptzylinder 1 und die Leitungen sind drucklos. Das Ansaugschaltventil 17 bleibt also in seiner offenen Grundstellung, so daß die Pumpe 14 über die Bremsleitung 3 und den Hauptzylinder 1 aus dem Druckmittelvorratsbehälter 2 ansaugen und über die Druckleitung 15 in die Bremsleitung 3 fördern kann. Das Trennventil 4 wird dabei geschlossen, so daß nur die Radbremse 7 des angetriebenen Rades gefüllt und ein Rückfluß des Druckmittels in den Hauptzylinder 1 gesperrt wird.

Da die Saugleitung 16 der Pumpe 14 an die Bremsleitung 3 anschließt, könnte in der Radbremse 8 ein Unterdruck erzeugt werden, wenn das Rückschlagventil 20 nicht vorhanden wäre. Denn das dem Einlaßventil 6 parallelgeschaltete Rückschlagventil 23 öffnet in Auslaßrichtung, so daß auch ein Schließen des Einlaßventils 6 keine Abhilfe schaffen würde. Für die Radbremse 7 stellt das Rückschlagventil 24 keine solche Gefahr dar, da es sich an der Druckseite der Pumpe befindet.

Das Rückschlagventil 20 in der Zweigleitung 11 ermöglicht von der dem Hauptzylinder 1 zugewandten Seite des Trennventils 4 nur eine Füllung der Radbremse. Zum Druckabbau wurde die neue Hilfsleitung 22 zur Druckseite der Pumpe 14 gelegt. Um das Trennventil 4 nicht wirkungslos zu machen, wurde das Rückschlagventil 21 eingefügt. Während der Antriebsschlupfregelung wird der Druck in der Radbremse 7 über das Einlaßventil 5 und das Auslaßventil 9 geregelt. Damit auch bei geöffnetem Auslaßventil 9 der Druck in der Radbremse 7 nicht unter Atmosphärendruck sinkt, besitzt das Saugventil 18 einen Vordruck von etwas mehr als ein 1 bar. Das Rückschlagventil 25 öffnet dagegen schon bei etwa 0,2 bar Druckdifferenz, damit die Pumpe aus dem drucklosen Druckmittelbehälter 2 ansaugen kann.

Damit während der Antriebsschlupfregelung, d.h. bei geschlossenem Trennventil 4, eine möglicherweise plötzliche Pedalbremsung auch die Radbremse 8 betätigt, ist dem Trennventil 4 das Rückschlagventil 26 parallelgschaltet.

### Bezugzeichenliste

- 1: Haupzylinder
- 2: Druckmittelsvorratsbehälter
- 3: Bremsleitung
- 4: Trennventil
- 5: Einlaßventil
- 6: Einlaßventil
- 7: Radbremse (angetriebenes Rad)
- 8: Radbremse (nicht angetriebenes Rad)
- 9: Auslaßventil
- 10: Auslaßventil
- 11: Zweigleitung
- 12: Rücklaufleitung
- 13: Niederdruckspeicher
- 14: Pumpe
- 15: Druckleitung
- 16: Saugleitung
- 17: Ansaugschaltventil
- 18: Saugventil
- 19: Überdruckventil
- 20: Rückschlagventil
- 21: Rückschlagventil
- 22: Hilfsleitung
- 23: Rückschlagventil
- 24: Rückschlagventil
- 25: Rückschlagventil
- 26: Rückschlagventil
- 27: Druckventil

## Patentansprüche

1. Bremsanlage mit einer Einrichtung zum Regeln sowohl des Bremsschlupfes als auch des Antriebsschlupfes, mit einem Hauptzylinder (1), einer ersten Radbremse (7) die über eine Bremsleitung (3) mit dem Hauptzylinder (1) verbunden ist und zu einem angetriebenen Rad gehört, einer selbstansaugenden Pumpe (14) deren Saugseite mit einem Niederdruckspeicher (13) und durch eine an die Bremsleitung (3) anschließende Saugleitung (16) über den Hauptzylinder (1) mit einem Druckmittelvorratsbehälter (2) verbunden ist und deren Druckseite über eine Druckleitung (15) an die Bremsleitung (3) anschließt, mindestens einem zur Pumpe (14) hin öffnenden Saugventil (18) zwischen der erste Radbremse (7) und der Saugseite der Pumpe (14), dessen Vordruck mindestens 1 bar beträgt, einem ersten Einlaßventil (5) in der Bremsleitung (3) zwischen dem Einmündungspunkt der Druckleitung (15) und der ersten Radbremse (7), einem Auslaßventil (9), über das die erste Radbremse (7) an eine Rücklaufleitung (12) zum Niederdruckspeicher (13) anschließbar ist, einem Trennventil (4) in der Bremsleitung (3) zwischen dem Einmündungspunkt der Druckleitung (15) und dem Hauptzylinder (1), einem sperrbaren Ansaugschaltventil (17) in der Saugleitung (16), dadurch **gekennzeichnet**, daß eine zweite Radbremse (8), die zu einem nicht angetriebenen Rad gehört, mittels einer Zweigleitung (11) an die Bremsleitung (3) zwischen dem Anschluß der Saugleitung (16) und dem Trennventil (4) angeschlossen ist,
daß sich in der Zweigleitung (11) ein zweites Einlaßventil (6) und zwischen dem zweiten Einlaßventil (6) und dem Anschluß der Zweigleitung (11) an die Bremsleitung (3) ein zur zweiten Radbremse (8) hin öffnendes erstes Rückschlagventil (20) angeordnet ist,
und daß eine Hilfsleitung (22) von der Zweigleitung (11) zwischen dem ersten Rückschlagventil (20) und dem zweiten Einlaßventil (6) zur Bremsleitung (3) zwischen dem Trennventil (4) und dem ersten Einlaßventil (5) verläuft, wobei in der Hilfsleitung (22) ein zweites Rückschlagventil (21) angeordnet ist, das von der Seite des zweiten Einlaßventils (6) zur Seite des ersten Einlaßventils (5) hin öffnet.

2. Bremsanlage nach Anspruch 1, dadurch **gekennzeichnet**, daß das Ansaugschaltventil (17) ein drucklos offenes, vom Hauptzylinderdruck hydraulisch sperrbares Zweiwegeventil ist.

3. Bremsanlage nach Anspruch 1 oder 2, dadurch **gekennzeichnet**, daß parallel zum Trennventil (4) ein Rückschlagventil (26) angeordnet ist, das bei Druck vom Hauptzylinder (1) her öffnet.

4. Bremsanlage nach einem der vorhergehenden Ansprüche, dadurch **gekennzeichnet**, daß dem Trennventil (4) ein Überdruckventil (19) parallelgeschaltet ist, dessen Vordruck über dem zur Antriebsschlupfregelung vorgesehenen Bremsdruck liegt und das zum Hauptzylinder (1) hin öffnet.

## Claims

1. A brake system with a device for controlling both the brake slip and the traction slip, including a master cylinder (1), a first wheel brake (7) connected with the master cylinder (1) via a brake line (3) and associated with a driven wheel, a self-priming pump (14) whose suction side communicates with a low-pressure accumulator (13) and, via the master cylinder (1) through a suction line (16) connected to the brake line (3), with a pressure medium storage reservoir (2), and whose delivery side is connected to the brake line (3) via a pressure line (15), at least one suction valve (18) arranged between the first wheel brake (7) and the suction side of the pump (14) and opening towards the pump (14) and having a pre-pressure of at least one bar, a first inlet valve (5) in the brake line (3) between the point where the pressure line (15) ends in the brake line (3) and the first wheel brake (7), an outlet valve (9) by way of which the first wheel brake (7) is connectible to a return line (12) leading to the low-pressure accumulator (13), a shut-off valve (4) in the brake line (3) between the point where the pressure line (15) ends in the brake line (3) and the master cylinder (1), a lockable suction control valve (17) in the suction line (16),
**characterized** in that, by means of a branch line (11), a second wheel brake (8), associated with a non-driven wheel, is connected to the brake line (3) between the connection of the suction line (16) and the shut-off valve (4); in that a second inlet valve (6) is provided in the branch line (11), and a first non-return valve (20) opening towards the second wheel brake (8) is arranged between the second inlet valve (6) and the connection of the branch line (11) to the brake line (3); and in that an auxiliary line (22) runs from the branch line (11) between the first non-return valve (20) and the second inlet valve (6) to the brake line (3) between the shut-off valve (4) and the first inlet valve (5), in the auxiliary line (22) a second non-return valve (21) being arranged which opens from the side of the second inlet valve (6) towards the side of the first inlet valve (5).

2. A brake system as claimed in claim 1,
**characterized** in that the suction control valve (17) is a two-way valve which is open when pressureless and is hydraulically lockable by the master cylinder pressure.

3. A brake system as claimed in claim 1 or in claim 2,
**characterized** in that a non-return valve (26), opening when exposed to pressure from the master cylinder (1), is arranged in parallel to the shut-off valve (4).

4. A brake system as claimed in any one of the preceding claims,
**characterized** in that a pressure relief valve (19) is connected in parallel to the shut-off valve (4), the pre-pressure of the pressure relief valve (19) being in excess of the braking pressure provided for traction slip control and the pressure relief valve (19) opening towards the master cylinder (1).

## Revendications

1. Système de freinage à dispositif de régulation à la fois du glissement de freinage et du glissement de traction, comprenant un maître-cylindre (1), un premier frein de roue (7), qui est relié au maître-cylindre (1) par une conduite de frein (3) et est associé à une roue motrice, une pompe (14) à auto-amorçage, dont le côté d'aspiration est relié à un accumulateur basse pression (13) et, par une conduite d'aspiration (16) raccordée à la conduite de frein (3) et en passant par le maître-cylindre (1), à un réservoir de stockage d'agent de pression (2) et dont le côté de refoulement est raccordé à la conduite de frein (3) par l'intermédiaire d'une conduite de refoulement (15), au moins une valve d'aspiration (18), qui est disposée entre la premier frein de roue (7) et le côté d'aspiration de la pompe (14) et s'ouvre vers la pompe (14) et dont la pression de précontrainte est égale à au moins 1 bar, une première valve d'entrée (5), disposée dans la conduite de frein (3) entre le point de débouché de la conduite de refoulement (15) et le premier frein de roue (7), une valve de sortie (9), par l'intermédiaire de laquelle le premier frein de roue (7) peut être raccordé à une conduite de retour (12) menant à l'accumulateur basse pression (13), une valve d'isolement (4), disposée dans la conduite de frein (3) entre le point de débouché de la conduite de refoulement (15) et le maître-cylindre (1), et une valve de commutation d'aspiration (17) disposée dans la conduite d'aspiration (16) et agencée de façon à pouvoir être bloquée,
caractérisé en ce qu'un second frein de roue (8), qui est associé à une roue non motrice, est raccordé au moyen d'une conduite de dérivation (11) à la conduite de frein (3) entre le point de raccordement de la conduite d'aspiration (16) et la valve d'isolement (4),
en ce que, dans la conduite de dérivation (11), il est disposé une seconde valve d'entrée (6) et, entre la seconde valve d'entrée (6) et le point de raccordement de la conduite de dérivation (11) à la conduite de frein (3), une première valve anti-retour (20) qui s'ouvre vers le second frein de roue (8)
et en ce qu'une conduite auxiliaire (22) s'étend de la conduite de dérivation (11), entre la première valve antiretour (20) et la seconde valve d'entrée (6), à la conduite de frein (3), entre la valve d'isolement (4) et la première valve d'entrée (5), tandis que, dans la conduite auxiliaire (22), il est disposé une seconde valve antiretour (21) qui s'ouvre du côté de la seconde valve d'entrée (6) vers le côté de la première valve d'entrée (5).

2. Système de freinage selon la revendication 1, caractérisé en ce que la valve de commutation d'aspiration (17) est une valve à deux voies qui est ouverte en l'absence de pression et qui est agencée de façon à pouvoir être bloquée hydrauliquement par la pression du maître-cylindre.

3. Système de freinage selon la revendication 1 ou 2, caractérisé en ce qu'une valve antiretour (26), qui s'ouvre sous l'action de la pression du maître-cylindre (1), est disposée en parallèle à la valve d'isolement (4).

4. Système de freinage selon l'une des revendications précédentes, caractérisé en ce qu'une valve de surpression (19), dont la pression de précontrainte est supérieure à la pression de freinage prévue pour la régulation du glissement de traction et qui s'ouvre vers le maître-cylindre (1), est montée en parallèle à la valve d'isolement (4).
